# EUROPEAN PATENT APPLICATION

(11) **EP 1 769 856 A2**
(43) Date of publication of application: **04.04.2007**
(21) Application number: 06020697.6
(22) Date of filing: 02.10.2006
(51) Int. Cl.: B09B 3/00, B09C 1/08, A62D 3/00, C04B 18/04

(54) **A process for fixing heavy metals in inorganic materials, particularly MSWI - bottom ash and soil**

(30) Priority: 30.09.2005 NL 1030085
(71) Applicant: Insulinde Recycling & Milieu B.V., 5048 TD Tilburg (NL)
(72) Inventor: Keulen, Arno, 3514 CP Utrecht (NL); Bleeker, Peter Johannes, 1616 HC Hoogkarspel (NL)
(74) Representative: Griebling, Onno

(57) **Abstract**

A process is disclosed for the fixation of heavy metals, being present in inorganic materials, which have a macro-structure, mainly consisting of oxides of silicon, calcium, aluminium, and potassium, especially organic hydrophilic acids containing MSWI-bottom ash and polluted soil, wherein the process comprises that the inorganic material is mixed, at a usual temperature and pressure, with activated carbon material. In a preferred embodiment, the material to be treated is first subjected to a washing treatment in 2 steps. The thus obtained product can thereafter be immobilized with an inorganic hydraulic binder having a low gypsum content, to obtain a product having a strongly reduced leaching of heavy metals and halides and sulphate.

## Description

The invention relates to a process for fixing heavy metals, present in inorganic materials having a macro-structure, mainly consisting of oxides of silicon, calcium, and aluminium, particularly organic, hydrophilic acids containing MSWI-bottom ash and polluted soil, by mixing the inorganic material, at a usual temperature and pressure, with powdery, activated carbon material.

It is known from literature (A. van Zomeren, R.N.J. Comans, Environ. Dci. Technol., 2004, 38, 3927-3932) that the leaching of heavy metals from MSWI-bottom ash is promoted by the presence of natural organic material, such as humic and fulvic acids. The metals form complexes with these organic compounds into good leachable complexes.

It is further known, that activated carbon materials are able to bind or absorb the abovementioned organic acids.

It is as such known from DE-19.514.577 A1 that the absorption of harmful compounds, among which heavy metals, to activated carbon is stronger than to humic compounds ("Humin stoffen"), as well as the fact that heavy metals can not be immobilized sufficiently with only activated carbon. Immobilization of heavy metals by using a combination of humic compounds and activated carbon, is nevertheless not mentioned nor suggested.

It has now surprisingly been found, that by adding a solid, in particular powdery, activated carbon to the bottom ash, the organic acids are bound and no longer easily leachable. Thereby the leaching of heaving metals (such as chromium, nickel, copper, zinc, molybdenum, lead, cadmium, tin and antimony, but specifically copper and antimony) from MSWI-bottom ash is decreased.

It is observed that the content of organic acids, in particular the organic hydrophilic acids, such as humic acid and fulvic acid, measured as DOC ("dissolved organic carbon"), in bottom ash is generally between 20 and 600 mg/kg of dry matter (measured by means of the column test). These concentrations of hydrophilic acids appeared to be no problem by using the process according to the invention. Said humic and fulvic acids are detected in bottom ash and polluted soil to be treated, according to a process known as such.

To further increase on the environmental quality, so that the obtained product can be classified into category 1 of the Building Material Order, it is preferred to decrease the leaching from the bottom ash of metals and salts such as chloride, bromide, fluoride and sulphate. This can be attained by washing the bottom ash, as a pre-treatment; and/or to stabilize the treated bottom ash with an inorganic hydraulic binder, for example a cement composition known in the market as CEM 42.5.

The present invention thus relates, in a preferred embodiment, to a process consisting of a washing process, followed by the addition of a solid, powdery activated carbon material, by which the abovementioned organic compounds, particularly the organic hydrophilic acids, such as humic and fulvic acids, remain bounded in the MSWI-bottom ash, and by which specifically the leaching of heavy metals (organic metal complexes) is decreased. It appeared that also the leaching of sulphate, halides (F, Cl, Br) and metals is decreased. The particle size of the powdery carbon material is not critical, provided that it is small enough to allow an intimate contact with the material to be treated.

Attractive preferred embodiments of the processes according to the invention are defined in the subclaims.

The invention further relates to a process for the immobilization of heavy metals and halogenides and sulphate, present in inorganic materials having a macro-structure, mainly consisting of oxides of silicon, calcium, and aluminium, particularly MSWI-bottom ash and polluted soil, wherein an inorganic material, treated according to the invention, is mixed with a hydraulic binder, to obtain, in the presence of water, a hard, stony product, to be formed or not.

The amount of inorganic hydraulic binder, to be added, is preferably 1-15% b.w., particularly 1-10% b.w., related to the dry matter content of the treated inorganic material.

The invention will be explained hereafter on the basis of a bottom ash, obtained from a waste incineration equipment (in short: MSWI, municipal solid waste incinerator) for the incineration of domestic waste.

### Process description

The process used to improve the environmental quality of MSWI bottom ash may consist of the following parts:
1. A washing process
2. Addition of solid, active carbon materials to the MSWI bottom ash
3. Addition of an inorganic hydraulic binder.

### The washing process

The MSWI-bottom ash is, preferably, washed in two steps. In the first step, the MSWI-bottom ash is washed with a L/S ratio varying from 0.1 - 10 1/kg, but more particularly a ratio of the L/S ratio of from 0.1 - 0.7. This washing step can optionally, take place in the slags remover of a waste incineration equipment. When the bottom ash has undergone this first washing step, then the bottom ash is thereafter, preferably, washed with clean water to remove the adhered water (which usually still contains salt anions, sulphate and (heavy) metals) from the bottom ash.

### Addition of solid activated carbon materials to the MSWI bottom ash

A solid activated carbon material is added to the bottom ash, preferably in powder form to ensure a good contact, if desired after the MSWI bottom ash underwent the above described washing step. The added material can be activated carbon or carbon containing fly ash which results in the gasification of waste wood. Concentrations wherein the activated carbon materials can be added, vary from 0.1% to 10%, more particularly from 0.1% - 3%.

In addition to the activated carbon material, an inorganic hydraulic binder can be added in an amount varying from 1 - 15%, more in particularly 1 - 10%. Such a binder can consist of (a combination of) different kinds of cement, such as blast furnace cement, Portland cement or combinations of fly ash-containing cements, for example a cement composition known in the market as CEM 42.5. The used binder preferably contains a low amount of gypsum. Usually, 6 - 10% b.w. of gypsum (calcium sulphate) is taken in an inorganic hydraulic binder to control the setting time of the binder. It was nevertheless found that the amount of gypsum can be decreased considerably and an amount of for example 2 - 4% b.w., expediently about 2,5% b.w., still allows a fast hardening of the mixture without being detrimental for the hardness of the final product. It was found that with such a cement, having a low content of gypsum, the leaching of, particularly, antimony can be decreased considerably.

The invention will hereafter be explained by means of the following examples.

### Examples

### Example 1.

The following recipe was made on the basis of 100%, copper contamination containing, MSWI bottom ash, which contained humic and fulvic acids (detected qualitatively):

| **Recipes** | **Percentages of additives** |
|---|---|
| 1.0 Untreated bottom ash (zero sample) | No additives |
| 1.1/1.2 Bottom ash and activated carbon | 1% activated carbon |

Thereafter the different recipes were tested for leaching by means of the first step of the cascade test (L/S=20) according to NEN 7349. The results (in mg/kg dm) are given in the following table.

| Recipe number | Copper (mg/kg) |
|---|---|
| 1.0 | 2.40 |
| 1.1 | 0.29 |
| 1.2 | 0.14 |

It appears from the results that the addition of said powdery activated carbon material results in a considerable decrease of the leaching of copper, despite the presence of organic hydrophilic acids.

### Example 2.

The following recipe was composed on the basis of 100%, copper contaminated soil, which also contained humic and fulvic acids:

| **Recipe number** | **Percentage of additives** |
|---|---|
| 2.0 | No additives |
| 2.1 | 1% activated carbon |

Thereafter the recipe was tested for leaching by means of the first step of the cascade test (L/S=20) according to NEN 7349. The results (in mg/kg dm) are given in the following table.

| **Recipe number** | **Copper (mg/kg)** |
|---|---|
| 2.0 | 73 |
| 2.1 | 0.24 |

It appears from the results that the addition of activated carbon results in a considerable decrease of the leaching of copper.

### Example 3.

The following recipe was composed on the basis of 100% MSWI bottom ash, which contained humic and fulvic acids:

| **Recipe number** | **Percentage of additives** |
|---|---|
| 3.0 | No additives |
| 3.1 | 6% inorganic hydraulic binder* + 1% activated carbon |

| | |
|---|---|
| * The used inorganic hydraulic binder had a gypsum content of 2% b.w., related to the dry matter content of the binder. | |

Thereafter the different recipes were tested for leaching by means of the first step of the cascade test (L/S=20) according to NEN 7349. The results (in mg/kg dm) are given in the following table.

| **Recipe number** | **Antimony (mg/kg)** | **Copper (mg/kg)** |
|---|---|---|
| 3.0 | 0.200 | 3.40 |
| 3.1 | 0.078 | 0.52 |

It appears from the results that the addition of activated carbon, whether or not in combination with the inorganic hydraulic binder, results in a considerable decrease of the leaching of antimony, as well as of copper.

Similar results are obtained for molybdenum, and other heavy metals.

It is observed that the invention has been explained in the above examples by using a MSWI bottom ash. By using soil, being polluted with heavy metals similar results can, nevertheless, be obtained. The invention thus generally relates to a process for the treatment of materials having a macro-structure, mainly consisting of oxides of silicon, calcium, aluminium, and potassium, which structure is polluted with heavy metals, such that the leaching of these heavy metals is decreased considerably.

## Claims

1. A process for the fixation of heavy metals, being present in inorganic materials having a macro-structure, mainly consisting of oxides of silicon, calcium, and aluminium, in particular organic hydrophilic acids containing MSWI bottom ash and polluted soil, by mixing the inorganic material, at a usual temperature and pressure, with a solid, in particular powdery, activated carbon material.

2. A process according to claim 1, wherein the organic hydrophilic acids consist of fulvic acid and/or humic acid.

3. According to the claims 1 or 2, wherein the inorganic material is mixed with 0.1% b.w. - 10% b.w. of solid, activated carbon material, in particular 0.1% b.w. - 3% b.w., based on the dry matter content of the inorganic material.

4. A process according to one or more of the claims 1 - 3, wherein the solid, activated carbon material consists of an activated carbon, particularly in powder form; or a fly ash, produced in the gasification of wood.

5. A process according to one or more of the claims 1 - 4, wherein the inorganic material is subjected, before mixing with activated carbon material, to a washing treatment with water to remove anionic salts, especially chloride, bromide, fluoride, and sulphate.

6. A process according to one or more of the claims 1 - 5, wherein the washing treatment is executed in 2 steps.

7. A process according to claim 6, wherein the washing treatment of the first step comprises that the bottom ash is contacted with water, in an L/S-ratio of 0.1 - 10 l/kg, in particular about 0.1 - 0.7 1/kg.

8. A process according to claim 6, wherein the washing treatment of the second step is executed with an amount of water, which is sufficient to remove the water being present from the first step and being attached to the inorganic material.

9. A process according to one or more of the claims 5 - 8, wherein the washing treatment, is in case of the MSWI-bottom ash, executed in the slags remover of the waste incineration equipment.

10. A process for the immobilization of heavy metals, being present in inorganic materials having a macro-structure, mainly consisting of oxides of silicon, calcium, and aluminium, in particular organic hydrophilic acids containing MSWI-bottom ash or polluted soil, wherein the inorganic material being treated according to one or more of the claims 1 - 9, is mixed with an inorganic hydraulic binder, to obtain, in the presence of water, of a product to be formed to a hard, stony material.

11. A process according to claim 10, wherein a solid inorganic hydraulic binder is added in an amount of from 1 - 15% b.w., preferably 1 - 10% b.w., relative to the dry matter content of the treated inorganic material.

12. A process according to claims 10 - 11, wherein a solid, inorganic hydraulic binder is added which has a gypsum content of 1 -4% b.w., preferably 2-4% b.w., relative to the dry matter content of the total amount of binder.
